# EUROPEAN PATENT APPLICATION

(11) **EP 0 967 450 A2**
(43) Date of publication of application: **29.12.1999**
(21) Application number: 99112157.5
(22) Date of filing: 24.06.1999
(51) Int. Cl.: F27B 9/10, F27B 9/36

(54) **Gaseous fuel heating unit**

(30) Priority: 25.06.1998 IT TO980545
(71) Applicant: Italtecnogas S.r.l., 10036 Settimo Torinese (Torino) (IT)
(72) Inventor: D'Ursi, Vincenzo, 10036 Settimo Torinese (Torino) (IT)
(74) Representative: Rambelli, Paolo

(57) **Abstract**

A heater unit (1) which can be supplied with any type of gaseous fuel such as methane, LPG, town gas, etc., is described. The unit (1) comprises a first jacket (2) which defines the heating region (V) and a second jacket (3) disposed outside the first jacket (2) and defining a space (4) relative to the first jacket (2). Combustion means (6), preferably constituted by one or more sets of combustion heads (8) supplied with gaseous fuel, generate a flow of heating aeriforms directed towards the said space (4) so as to bring about heating of the heating region (V) defined by the first jacket (2). The heating flame never comes directly into contact with the heating region (V) or with the outside atmosphere, ensuring optimal uniformity of heating temperature and a high level of safety. The preferred application is for heating ducts through which a material to be heated flows, for example, with a view to bringing about melting.

## Description

The present invention relates to a heater unit which can be used, for example, for heating mechanical components of various shapes and sizes, for heating isolated metal parts of various shapes and sizes and, in particular, for heating hollow metal cylinders through which a material (for example, a plastics material, rubber, aluminium, glass or various metals) flows in order to be brought to a predetermined temperature such as a melting point which may be quite high (for example, of the order of 1500°C).

At the moment, electric heater units are used almost exclusively for applications of this type.

However, the possibility of using a gaseous fuel, such as methane, LPG, town gas, etc., as an energy source for these purposes is particularly attractive both from an energy-saving point of view and with regard to the possibility of achieving a saving in terms of maintenance costs and also in relation to the cost of any replacement parts.

These advantages must, however, be combined with optimal operation and with a capability to produce systems with a high level of safety.

The object of the present invention is to provide a gaseous-fuel heater unit which can respond in an optimal manner to the requirements expressed above.

According to the present invention, this object is achieved by means of a heater unit having the specific characteristics recited in the following claims.

The arrangement according to the invention ensures optimal operating conditions, particularly with regard to the following capabilities:
- to achieve the desired temperature in short period of time,
- to maintain the temperature with optimal accuracy,
- to achieve good uniformity of temperature over the surface affected by the heating action,
- to interface with a sophisticated control and warning system.

The arrangement according to the invention also ensures a high level of safety, particularly by virtue of the following factors:
- the flame is never in contact with the heating cylinder or with the outside atmosphere,
- detachment of the flame can never occur,
- safety members can be provided for automatically extinguishing the burner and interrupting the flow of fuel in the event of malfunctions of combustion or of the gas or air supply, and
- a leakage-detection system can be provided for automatically interrupting the flow of fuel, consequently extinguishing the burner, in the event of leakage of gaseous fuel from the system.

For given performance, the total saving in terms of energy absorption can be estimated as slightly more than 60%, with corresponding savings achievable in terms of maintenance hours and of the cost of any replacement parts required.

The invention will now be described, purely by way of non-limiting example, with reference to the appended drawing, in which:
Figure 1 is a vertical median section through a gaseous-fuel heater unit according to the invention, and
Figure 2 is a section taken on the line II-II of Figure 1.

The embodiment illustrated in the drawings relates to a heater unit 1 which is intended to perform its heating function on a generally cylindrical heated region V.

In particular, the region V may contain a hollow metal cylinder P (in practice a section of piping) through which a material to be brought to a predetermined temperature flows. By way of indication (but it is pointed out once more that this is only an example) the material in question may be a plastics material, rubber, aluminium, glass, or various metals, to be brought, again by way of example, to a melting point which may be quite high (for example, 1500°C).

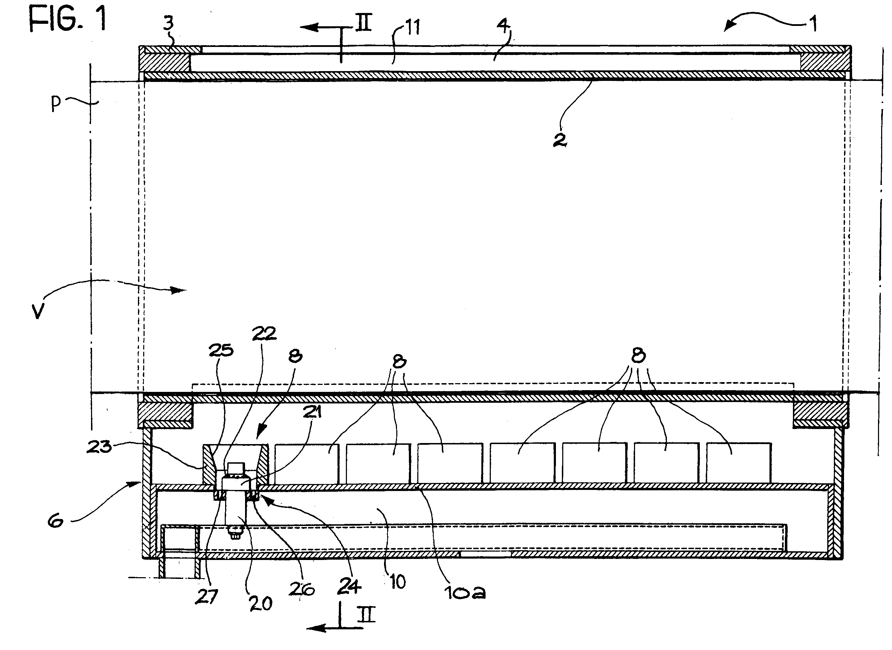

The region V may have a diameter, for example, of between 150 and 200 mm and the unit 1 may have a length, appreciable in particular in the view of Figure 1, of the order of 350-400 mm.

From this latter datum, it can easily be understood that several units such as the unit 1 shown in the drawings can be arranged in cascade to act on adjacent heating regions.

The units in question thus act as respective heating belts which can act, for example, on successive portions of a hollow metal cylinder P acting as a duct. In this way it is possible, amongst other things, to create heating zones which can be kept at selectively controlled temperature levels which may even differ from one another.

It is, however, clear that the cylindrical configuration of the heating region V illustrated herein is shown purely by way of example since the arrangement according to the invention can perform its heating action, in general, on regions of widely varying shapes and, in particular, cross-sections.

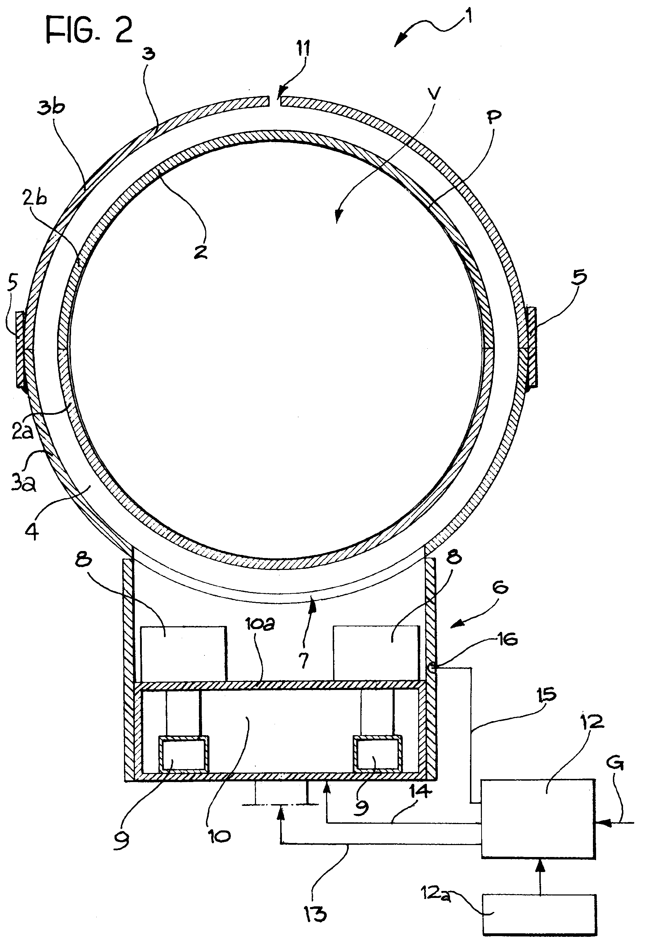

As can best be seen in the sectioned view of Figure 2, the body of the unit 1 is constituted by two jackets 2, 3 (which are tubular and concentric in the embodiment shown, in which the region V is cylindrical) which in any case are disposed, respectively, in an inner position facing towards the region V (jacket 2) and in an outer position (jacket 3) so as jointly to define a space 4 which, in the embodiment illustrated, has a substantially circular ring-shaped cross-section.

However, whilst retaining the same general arrangement, the jackets 2 and 3 may clearly adopt shapes other than that described herein and, in particular, shapes depending on the geometrical characteristics of the heating region V.

The jackets 2 and 3 are preferably not unitary tubular bodies since they are usually divided into complementary portions 2a, 2b and 3a, 3b, having generally semicylindrical shapes.

Although this solution is not essential for the purposes of the implementation of the invention, it has the advantage of enabling the jackets 2 and 3 to be opened for access to the heating region V, in particular, to permit easy mounting and removal of the unit 1, particularly when it is to be placed in its mounting position around the cylinder P or removed therefrom.

The jackets 2, 3 may be made of various materials which may be the same or different for the two jackets. Naturally, the preference is for materials which are good conductors of heat such as metals, for example, stainless steel, steel, or brass. However, particularly for the outer jacket 3, it is possible to consider the use of other materials, for example, ceramic materials, possibly also with a view to a thermally insulating function.

Two elongate locating elements, indicated 5 in the view of Figure 2, are disposed in the region of the facing longitudinal edges of the portions 3a and 3b of the jacket 3. The elements 5 are intended to perform a locating function between the two portions of the jacket 3 and also to take account of any variations of shape brought about by the heating in operation. The elements 5 may be fixed (for example welded) or possibly formed integrally with one of other of the portions 3a, 3b of the jacket. Although not shown explicitly in the drawings, a similar or equivalent arrangement may also be adopted for the jacket 2, the creation of portions projecting into the heating region V and/or into the space 4 preferably being avoided.

A combustion unit, generally indicated 6, is constituted basically by a metal casing (for example, of stainless steel, steel, or brass) located in a position generally adjacent the jackets 2 and 3 and communicating with the space 4 through an opening 7.

Heating sources (so-called heads), generally indicated 8, are mounted in the casing of the combustion unit 6.

In the embodiment shown, the combustion unit 6 has sixteen heads 8 arranged in two rows side by side, each row comprising eight heads.

As can be appreciated best from an observation of Figure 1, the rows in question are arranged in a manner such as to ensure a substantially uniform distribution of the heads longitudinally of the unit 1.

From an observation of Figure 2, on the other hand, it can be seen that the two rows of heads 8 are located in symmetrically opposed positions with respect to a virtual diametral plane A of the set of jackets 2, 3. In the mounting arrangement illustrated herein, the plane A is oriented vertically. Clearly, however, the structure of the unit 1 according to the invention allows the location of the combustion unit 6 to be varied, in particular, so that the unit 6 can be located in any position relative to the longitudinal axis of the cylinder P (and hence of the heating region V), without substantially altering the operating conditions and characteristics of the unit.

The particular characteristic of the heads 8 just described, which may be made, for example, of stainless steel, steel and brass, is that the air and the gas are not premixed, but the gaseous fuel and the combustion-supporting air are mixed only at the position of the flame. This ensures optimal mixing between the air and gas for the purposes of optimal combustion, and also permits a wide adjustment between the minimum and maximum power values of the burner. This is achieved whilst avoiding the phenomenon known as "flame detachment" for any power value, thus ensuring, together with other characteristics of the system, complete safety of the system.

Gas and air supply ducts 9 and 10 as well as ignition electrodes (the latter are not shown specifically but are of known type) are also disposed in the casing of the combustion unit 6.

The flames which are generated by the heads 8 and which are directed towards the opening 7 are intended to lick the surface of the inner jacket 2 and, with the hot fumes, flow along the entire space 4 in order to emerge (naturally, this relates only to the fumes) from a longitudinal slot 11 formed in the jacket 3 along a generatrix thereof, in a position usually diametrally opposite the combustion unit 6.

This arrangement ensures that the flames generated by the heads 8 never come into direct contact with the cylinder P (and hence with the combustion region V) or with the outside atmosphere, since they are always and in any case confined inside the casing of the combustion unit 6 and, partially, in the space 4.

This translates, in the first place, into considerable uniformity of the heating effect, which is also due to the homogenizing effect of the inner jacket 2 and, in any case, into a high level of safety in operation.

A combustion operating and control unit, indicated 12, usually positioned on a movable support structure adjacent the unit 1, is connected to the unit 1 by means of pipes, usually flexible pipes 13 and 14, for transporting the gas and the air, and by means of signal wires, generally indicated 15, connected to one or, preferably, to several temperature-detecting probes disposed on the unit 1 and, in particular, on the bodies heated thereby. Only one of these probes, indicated 16, has been shown by way of example in Figure 2.

The unit 12 regulates the supply of fuel gas and of combustion-supporting air towards the unit 1 and, for this purpose, is connected to a delivery line G for the gaseous fuel.

The unit usually has an associated control module 12a (usually comprising an electronic unit such as, for example, a PLC - acronym for programmable logic controller).

In the gaseous-fuel supply line there are all the necessary control and safety devices (which are of known type and do not need to be described herein and which, moreover, are not intrinsically relevant *per se* to the specific characteristics of the invention) as well as a flow regulator which meters the amount of gaseous fuel in dependence on the flow-rate of air admitted so as to maintain an optimal value of the air-gas ratio. The flow-rate of air in turn is controlled by another regulator, typically an electronic regulator, in dependence on the temperature value detected on the cylinder of the machine so as to ensure the desired heating level. Excellent modulation of the power supplied can thus be achieved whilst optimal combustion is always maintained.

The characteristics of the control system and the structural characteristics of the heads 8 permit a very wide range of adjustment of the power supplied, typically between 5% and 100%, this feature enabling the metering of the power supplied always to be optimal, thus optimizing consumption.

As already stated, a typical configuration of use of the invention provides for several units 1 to be arranged in cascade as heating belts on a single cylinder. Different heating levels can thus also be achieved, for example, by independent regulation of the power and hence of the gas and air fluids supplied to the various belts. A fan common to all the belts is usually provided for the combustion-supporting air.

In particular, a system associated with the control unit 12 to detect gas leakages is constituted, for each system or for each unit 1, by a microprocessor gas detector with two intervention thresholds which can control a solenoid valve disposed in the gas-supply line so as automatically to extinguish the burner and to interrupt the flow of gas in the event of malfunctions of combustion or of the gas or air supply.

The structure of the heads 8 can be seen in greater detail with reference to the lower left-hand portion of Figure 1 in which one of the heads 8 is shown in a partially-sectioned view.

Basically, each head 8 comprises, in the embodiment shown, a gas-supply nozzle 20 constituted basically by a tubular duct communicating at its lower end with the respective gas-supply line 9 and having at its upper end a circular ring-shaped diffuser 21 with a plurality of gas-outlet holes 22.

Around the nozzle 20, particularly in positions surrounding the diffuser 21, there is a housing structure comprising a cup-shaped body 23 the base wall of which has a central hole 24 through which the nozzle 20 can extend (preferably with a screw coupling). The arrangement is such that the diffuser 21 and the holes 22 face into the cavity inside the cup-shaped body 23. This cavity preferably has a flared mouth 25 which becomes wider in the direction in which the flame is diffused and propagated (and hence upwards in the embodiment shown).

The base plate of the cup-shaped body 23 is preferably formed with an externally threaded shank so that it can be mounted in a corresponding hole in one or both of the casings 9 and 10. Moreover, in a position surrounding the nozzle 20, there is a ring of holes 26 in the base wall for allowing air to flow in from the supply line 10 towards the cavity of the cup-shaped body 23.

The holes 26 are preferably inclined and hence oblique relative to the principal common axis (vertical in the embodiment shown) of the nozzle 20 and of the cup-shaped body 23. This oblique arrangement is intended to impart to the air flowing from the line 10 towards the cavity of the body 23 a helical motion with controlled turbulence directed towards optimizing the combustion process.

Naturally, the principle of the invention remaining the same, the details of construction and forms of embodiment may be varied widely with respect to those described and illustrated, without thereby departing from the scope of the invention.

## Claims

1. A heater unit for heating a heating region (V) in a controlled manner, characterized in that it comprises:
- a first jacket (2) defining the heating region (V),
- a second, jacket (3), disposed outside the first jacket (2) and defining a space (4) relative to the first jacket (2), and
- combustion means (6) for generating a flow of heating aeriforms in the space (4) so as to bring about heating of the heating region (V) defined by the first jacket (2).

2. A heater unit according to Claim 1, characterized in that the second jacket (3) defines, relative to the first jacket (2), a space (4) having a first zone in which the combustion means (6) are located and a second zone, substantially opposite the first zone, in which there is at least one opening (11) for the outflow of the heating aeriforms from the space (4).

3. A heater unit according to Claim 1 or Claim 2, characterized in that the combustion means (6) are flame combustion means configured in a manner such that the flame extends only marginally into the space (4) and does not come into contact either with the heating region (V) or with the outside atmosphere.

4. A heater unit according to any one of the preceding claims, characterized in that at least one of the first jacket (2) and the second jacket (3) is constituted by several portions (2a, 2b, 3a, 3b) which can be separated to facilitate access to the heating region (V).

5. A heater unit according to Claim 4, characterized in that relative locating elements (5) are interposed between at least some (3a, 3b) of the said portions.

6. A heater unit according to any one of the preceding claims, characterized in that the first jacket (2) and the second jacket (3) are substantially tubular, the first jacket (2) being substantially surrounded by the second jacket (3).

7. A heater unit according to any one of the preceding claims, characterized in that the first jacket (2) and the second jacket (3) are substantially cylindrical and are arranged concentrically with one another, the combustion means (6) acting in a substantially radial direction relative to the jackets (2, 3).

8. A heater unit according to any one of the preceding claims, characterized in that the first jacket (2) and the second jacket (3) as well as the space (4) are coextensive with one another for a certain length, and in that the combustion means (6) are elongate with a respective length substantially corresponding to the said length.

9. A heater unit according to Claim 7 and Claim 8, characterized in that the combustion means (6) extend substantially along one of the generatrices of the cylindrical shape of the jackets (2, 3).

10. A heater unit according to Claim 2 and Claim 9, characterized in that the outflow opening (11) comprises an opening extending along a generatrix of the second jacket (2), the first and second zones of the space (4) being located approximately diametrally opposite one another.

11. A heater unit according to any one of the preceding claims, characterized in that the first jacket (2) is made of a metallic material.

12. A heater unit according to any one of the preceding claims, characterized in that the second jacket (3) is made of a material selected from the group constituted by metallic materials and ceramic materials.

13. A heater unit according to any one of the preceding claims, characterized in that the combustion means comprise a plurality of combustion heads (8) arranged in a linear array beside and coextensive with the space (4).

14. A heater unit according to Claim 13, characterized in that the combustion heads (8) are arranged in a plurality of linear arrays side by side.

15. A heater unit according to any one of the preceding claims, characterized in that the combustion means (6) comprise at least one combustion head (8), the head comprising:
- a nozzle (20) for supplying a gaseous fuel, the nozzle having a ring of fuel-outlet openings (22) at one end, and
- a cup-shaped body (23) disposed in a position generally surrounding the nozzle (20) so as to define a cavity into which the fuel-outlet openings (22) open, the cup-shaped body (23) having a base wall through which the nozzle (24) and a ring of respective openings (26) for admitting combustion-supporting air to the cavity extend.

16. A heater unit according to Claim 15, characterized in that the nozzle (20) and the cup-shaped body (23) have a common principal axis, and in that the respective openings (26) are oriented in a generally oblique direction relative to the principal axis.

17. A heater unit according to any one of the preceding claims, characterized in that the combustion means (6) have an associated control unit (12) for the controlled supply of the fuel and of the supporter of combustion towards the combustion means (6).

18. A heater unit according to Claim 17, characterized in that the combustion means (6) comprise at least one line (9) for the supply of a gaseous fuel, and in that the control unit (12) has associated sensor means (16) for the automatic control of the operation of the combustion means (6).

19. A heater unit according to Claim 17, characterized in that the sensor means comprise means for detecting leakages of the gaseous fuel, and in that the control unit (12) comprises means for automatically interrupting the operation of the combustion means (6) upon detection of a leakage of the gaseous fuel by the sensor means (16).
The whole substantially as described and illustrated and for the purposes specified.
